# EUROPÄISCHE PATENTSCHRIFT

(11) **EP 1 371 143 B1**
(45) Veröffentlichungstag und Bekanntmachung des Hinweises auf die Patenterteilung: **18.05.2005**
(21) Anmeldenummer: 02737750.6
(22) Anmeldetag: 21.03.2002
(51) Int. Cl.: H04B 1/00

(54) **SCHALTUNGSANORDNUNG ZUM KOMPENSIEREN DER DÄMPFUNG IN EINEM ANTENNENZULEITUNGSKABEL FÜR EIN MOBILFUNKGERÄT**
CIRCUIT ARRANGEMENT FOR COMPENSATION OF THE DAMPING IN AN ANTENNA FEED CABLE FOR A MOBILE RADIO DEVICE
CIRCUIT DESTINE A COMPENSER L'AFFAIBLISSEMENT DANS UN CABLE D'ALIMENTATION D'ANTENNE POUR UN APPAREIL RADIOMOBILE

(30) Priorität: 21.03.2001 DE 10114531
(43) Veröffentlichungstag der Anmeldung: 17.12.2003
(73) Patentinhaber: Funkwerk Dabendorf GmbH, 15806 Dabendorf (DE)
(72) Erfinder: NAST, Helmut, 12557 Berlin (DE); JACOBI, Raimo, 12557 Berlin (DE)
(74) Vertreter: Schubert, Klemens, Dr.
(86) Internationale Anmeldenummer: PCT/DE2002/001075
(87) Internationale Veröffentlichungsnummer: WO 2002/078198

(56) Entgegenhaltungen:
- EP-A- 1 039 650
- DE-A- 4 405 885
- DE-A- 19 514 993
- DE-A- 19 536 640
- US-A- 5 898 908

## Beschreibung

Die Erfindung betrifft eine Schaltungsanordnung zum Kompensieren der Dämpfung in einem Antennenzuleitungskabel zwischen einem Mobilfunkgerät und einer externen Antenne.

Insbesondere in Kraftfahrzeugen werden Mobilfunkgeräte wegen der abschirmenden Wirkung der Karosserieteile häufig mit einer extern am Fahrzeug angeordneten Antenne betrieben. Hierzu ist das Mobilfunkgerät, beispielsweise ein von einer Freisprecheinrichtung aufgenommenes Mobiltelefon, über ein Antennenzuleitungskabel (HF-Kabel) mit der externen Antenne verbunden. Auch wenn der Empfang und die Möglichkeiten des Sendens durch die Verwendung der externen Antenne deutlich gegenüber einem Betrieb ohne externe Antenne verbessert werden, ist es als nachteilig anzusehen, dass die Sende- und

Empfangssignale in dem Antennenzuleitungskabel einer Dämpfung unterliegen. Daher wird das Antennenzuleitungskabel entsprechend in der Praxis bekannt gewordener Lösungen über spezielle zwischen dem Mobilfunkgerät und der externen Antenne angeordnete Schaltungsanordnungen zur Kompensation der in dem Antennenzuleitungskabel auftretenden Dämpfung geführt.

Eine für den vorgenannten Zweck geeignete Schaltungsanordnung wird beispielsweise in der DE 195 36 640 A1 beschrieben. Zur Entkopplung des Sendekanals vom Empfangskanal weist die für einen Betrieb in einem Frequenzband (Mobilfunkband) geeignete Schaltungsanordnung einen Sendezweig mit einem Leistungsverstärker und einen Empfangszweig mit einem Empfangsverstärker auf. Mittels eines weiterhin vorgesehenen Detektors wird das Vorhandensein eines von dem Mobilfunkgerät abgegebenen Sendesignals detektiert und der Sendezweig für den Sendebetrieb aktiv geschaltet. Anderenfalls nimmt die Schaltung einen Grundzustand ein, bei dem der Empfangszweig in den Signalweg zwischen Mobilfunkgerät und Antenne geschaltet ist. Das Umschalten zwischen Sende- und Empfangsbetrieb erfolgt mittels spezieller HF-Umschalter, die durch ein vom Detektor erzeugtes Schaltsignal betätigt werden.

Durch die DE 199 13 064 C1 wird eine vergleichbare Schaltungsanordnung für einen dualbandigen Betrieb offenbart. Auch bei dieser Schaltungsanordnung sind für das Umschalten zwischen dem Sende- und Empfangsbetrieb HF-Umschalter vorgesehen, welche von einer Detektionseinrichtung so geschaltet werden, dass im Sendebetrieb nur der für das jeweilige Frequenzband vorgesehene Leistungsverstärker aktiv ist, während anderenfalls die Empfangsverstärker in den Empfangszweigen beider Frequenzbänder aktiv, aber beide Leistungsverstärker abgeschaltet sind.

In der Praxis werden solche für den Singleband- oder Multibandbetrieb geeigneten Schaltungsanordnungen in einer separaten Baueinheit untergebracht, welche zwischen dem Mobilfunkgerät und der externen Antenne in die Antennenzuleitung eingefügt ist. Die entsprechende Baueinheit wird im Allgemeinen in der Nähe der Antenne, häufig in der C-Säule des Fahrzeugs, angeordnet.

Der Erfindung liegt die Aufgabe zugrunde eine gattungsgemäße Schaltungsanordnung so auszubilden, dass für diese eine, insbesondere aus schaltungstechnischer Sicht und bezogen auf den Zweck des Kompensierens auftretender Signaldämpfungen, günstigere Anordnung ermöglicht wird.

Die Aufgabe wird durch eine Schaltungsanordnung mit den Merkmalen des Hauptanspruchs gelöst. Vorteilhafte Ausgestaltungen bzw. Weiterbildungen der erfindungsgemäßen Schaltungsanordnung sind durch die Unteransprüche gegeben.

Die Schaltungsanordnung umfasst in an sich bekannter Weise zumindest einen zum Verstärken von auszusendenden HF-Signalen ausgebildeten Signalzweig mit einem oder mehreren Leistungsverstärkern (Sendezweig), einen zum Verstärken von empfangenen HF-Signalen ausgebildeten Signalzweig mit einem Empfangsverstärker (Empfangszweig) sowie eingangs- und ausgangseitig der Signalzweige, also geräte- oder antennenseitig, angeordnete HF-Umschalter und einen über Steuerverbindungen mit den HF-Umschaltern verbundenen Detektor. Durch den Detektor werden die HF-Umschalter über die Steuerverbindungen so angesteuert, dass im Falle der Detektion eines vom Mobilfunkgerät ausgehenden Sendesignals (Sendebetrieb) die HF-Signale über den Sendezweig der Schaltungsanordnung geführt werden. Sofern kein Sendesignal vorhanden ist oder sich die Schaltungsanordnung im Grundzustand befindet, ist der Empfangszweig in den Signalweg zwischen Mobilfunkgerät und Antenne geschaltet.

In erfindungswesentlicher Weise ist die Schaltungsanordnung in zwei voneinander getrennt angeordnete, durch Verbindungsleitungen miteinander verbundene Schaltungsteile aufgeteilt. Dabei handelt es sich um einen ersten Schaltungsteil, welcher im wesentlichen der Detektion des Sendesignals sowie der Erzeugung des Schaltsignals zum Umschalten der HF-Umschalter in den Sendebetrieb dient und neben den hierfür erforderlichen Bauteilen zumindest einen geräteseitigen (geräteseitig meint bezogen auf die Seite, an welche das mit der externen Antenne verbundene Mobilfunkgerät angeschlossen ist) HF-Umschalter umfasst. Dieser erste Schaltungsteil kann folglich als Steuerteil der Schaltungsanordnung bezeichnet werden. Der zweite Schaltungsteil dient im Wesentlichen der Signalverstärkung eines zu sendenden oder eines zu empfangenden HF-Signals und weist neben den hierfür erforderlichen Verstärkerbausteinen einen antennenseitigen HF-Umschalter auf. Der letztgenannte, nachfolgend auch als Verstärkerteil bezeichnete Schaltungsteil - und auch dies ist im Hinblick auf die Lösung der Aufgabe wesentlich - ist im Antennenfuß der externen Antenne angeordnet. Das zur Ansteuerung des antennenseitigen HF-Umschalters benötigte Schaltsignal wird über die bereits erwähnten Verbindungsleitungen zum Verstärkerteil übertragen.

Die erfindungsgemäße Ausbildung der Schaltungsanordnung wirkt sich durch die unmittelbare Anordnung des Verstärkerteils an der Antenne sehr vorteilhaft hinsichtlich der angestrebten Dämpfungsminderung aus. Zwar macht sich dabei mindestens eine zusätzliche Verbindungsleitung zur Antenne (bzw. zu dem an der Antenne angeordneten Schaltungsteil) erforderlich, jedoch entfällt dafür auf der anderen Seite der Einbau eines gesonderten, in der Praxis beispielsweise in der C-Säule eines Kraftfahrzeugs angeordneten Bauteils.

Gemäß einer besonders vorteilhaften Ausgestaltung erfolgt die Übertragung des Schaltsignals an den antennenseitigen HF-Umschalter dadurch, dass das Schaltsignal dem zwischen Steuerteil und Verstärkerteil übertragenen HF-Signal überlagert wird. Bei dieser Überlagerung handelt es sich jedoch vorzugsweise nicht um eine Modulation, vielmehr geschieht die Überlagerung durch eine Mehrspannungs- bzw. Mehrwertelogik, wodurch eine ungewollte frequenzmäßige Beeinflussung des HF-Signals einfacher zu vermeiden ist. Im Verstärkerteil wird das Schaltsignal wieder vom HF-Signal getrennt und dem antennenseitigen HF-Umschalter zugeführt. Durch diese Art der Ausbildung wird eine gesonderte Verbindungsleitung für die Übertragung des Schaltsignals vermieden. Entsprechend einer besonders vorteilhaften Weiterbildung der erfindungsgemäßen Schaltungsanordnung dient das von dem Detektor erzeugte Schaltsignal auch zur Ansteuerung des oder der Leistungsverstärker im Verstärkerteil. Der oder die Leistungs- bzw. Sendeverstärker sind dabei überhaupt nur im Sendebetrieb aktiv, im Grundzustand bzw. im Empfangsbetrieb hingegen abgeschaltet, was sich selbstverständlich günstig auf den Energieverbrauch der Schaltungsanordnung auswirkt.

Die letztgenannte Ausführungsform ermöglicht darüber hinaus eine dual- oder multibandfähige Auslegung der Kompensationsschaltung. Bei einer für einen dual- oder multibandigen Betrieb ausgelegten Ausführung der Erfindung sind im Sendezweig des Verstärkerteils vorzugsweise mehrere Leistungsverstärker vorgesehen, während zur Verstärkung eines empfangenen Signals ein breitbandig ausgelegter Empfangsverstärker dient. Um ein auszusendendes HF-Signal dem für das jeweilige Frequenzband geeigneten Leistungsverstärker zuzuführen, ist dem Detektor des Steuerteils bei dieser Ausführungsform ein Coder nachgeschaltet. Mittels des Coders wird dem dem Sendesignal zu überlagernden Schaltsignal eine zusätzliche Information über das zum Senden verwendete Frequenzband hinzugefügt. Das Schaltsignal enthält somit neben der die grundsätzliche Umschaltung in den Sendebetrieb bewirkenden Komponente einen Signalanteil, welcher von einem in dem Verstärkerteil vorgesehenen Decoder ausgewertet werden kann. Mittels des über den Decoder geführten Schaltsignals wird somit der antennenseitige HF-Umschalter in den Schaltzustand für den Sendebetrieb umgeschaltet und gleichzeitig ausschließlich der in Bezug auf das zum Senden verwendete Frequenzband richtige Leistungsverstärker aktiv geschaltet bzw. aufgesteuert. Das entsprechende Schaltsignal ist dabei je nach den Erfordemissen des oder der zur Leistungsverstärkung verwendeten Bausteine gestaltet. So ist es beispielsweise so codiert, dass mittels des Decoders aus ihm eine Schaltinformation zum Umschalten des antennenseitigen HF-Umschalters, eine generelle Einschaltinformation für den oder die Leistungsverstärker und ein Bandselect-Signal zur Auswahl des für das verwendete Frequenzband günstigen Verstärkers abgeleitet werden kann. Darüber hinaus können aber je nach konkreter Ausgestaltung der Schaltung und des verwendeten Coders bzw. Decoders gegebenenfalls noch weitere Schaltinformationen in dem hier als komplexes Schaltsignal bezeichneten Schaltsignal untergebracht sein.

Die entsprechend der verwendeten Verstärkerbausteine erforderliche Versorgungsspannung (bzw. erforderlichen Versorgungsspannungen) kann dem Verstärkerteil beispielsweise über den Innenleiter der auch zur Übertragung des HF-Signals dienenden Verbindungsleitungen oder über eine gesonderte Stromversorgungsleitung zugeführt werden.

Gemäß einer praxisgerechten Umsetzung der erfindungsgemäßen Schaltungsanordnung ist der erste Schaltungsteil (Steuerteil) in eine Freisprecheinrichtung für ein Mobiltelefon integriert. Die Trennung zwischen Steuer- und Verstärkerteil macht es zudem besonders vorteilhaft möglich, eventuell zur Befestigung der Antenne dienende Blech- oder Metallteile gleichzeitig für die Kühlung des Leistungsteils oder zumindest seiner Leistungsverstärker zu nutzen.

Die Erfindung soll anhand eines Ausführungsbeispieles näher erläutert werden. In den zugehörigen Zeichnungen zeigen:
- Fig. 1:: Ein stark vereinfachtes Blockschaltbild der erfindungsgemäßen Schaltungsanordnung;
- Fig. 2:: Eine detailliertere Darstellung der erfindungsgemäßen Schaltungsanordnung in einer für den Dualbandbetrieb geeigneten Ausbildung.

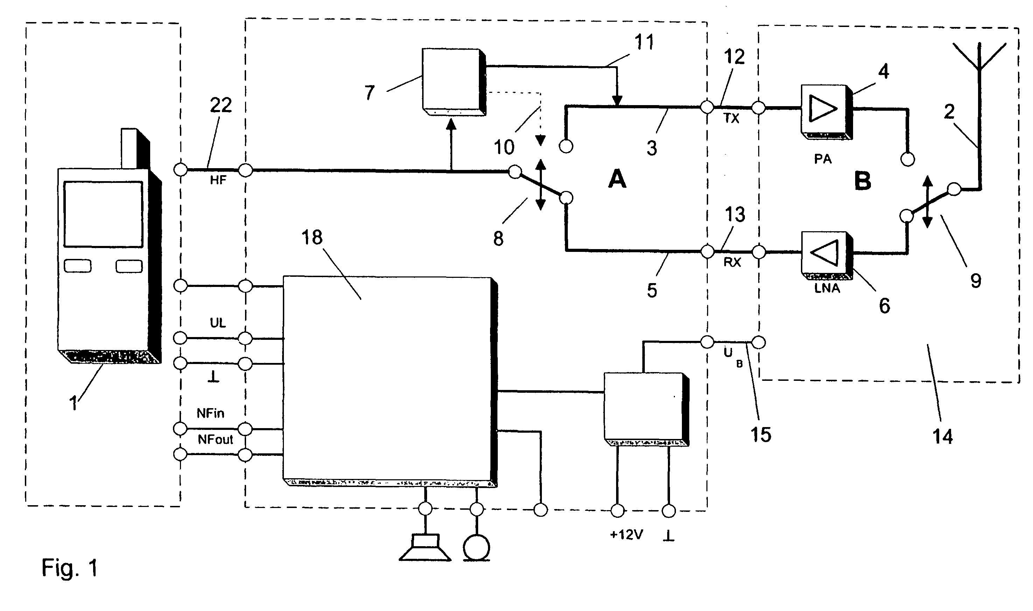

Durch die Fig. 1 wird das Grundprinzip der erfindungsgemäßen Schaltungsanordnung in einem sehr einfachen Blockschaltbild verdeutlicht. In dem dargestellten Beispiel dient die Schaltungsanordnung zur Kompensation der Dämpfung in einem Antennenzuleitungskabel 22 und in den weiterführenden Verbindungsleitungen 12, 13, über welche ein von einem Telefonhalter gehaltenes Mobiltelefon 1 mit einer externen Antenne 2 verbunden ist. Wie aus der Zeichnung ersichtlich, ist die vorliegend für den Betrieb in einem Frequenzband ausgelegte Schaltungsanordnung in zwei separate Schaltungsteile A und B aufgeteilt. Diese sind durch Verbindungsleitungen 12, 13 miteinander verbunden. Der Schaltungsteil A ist gemeinsam mit Bauteilen einer Freisprecheinrichtung 18 für das Mobiltelefon 1 in eine Elektronikbox integriert. Dieser Schaltungsteil A (Steuerteil) dient im Wesentlichen der Erkennung und Auswertung eines von dem Mobiltelefon 1 abgegebenen Sendesignals. Ein solches Sendesignal wird durch den Detektor 7 des Steuerteils A erkannt und von ihm ein Schaltsignal erzeugt, welches der Betätigung der HF-Umschalter 8, 9 dient. In der Darstellung befinden sich die HF-Umschalter 8, 9 in einem dem Grundzustand bzw. dem Empfangsbetrieb der Schaltungsanordnung entsprechenden Schaltzustand. In diesem Schaltzustand ist der über den Empfangsverstärker (LNA - Low Noise Amplifier) führende Signalzweig 5 in den Signalweg zwischen Mobiltelefon 1 und Antenne 2 geschattet. Wird nun vom Mobiltelefon 1 ein Sendesignal ausgegeben und vom Detektor 7 detektiert, so erzeugt der Detektor 7, wie bereits dargestellt, ein die HF-Umschalter 8, 9 in den jeweils anderen Schaltzustand umschaltendes und somit den Sendezweig 3 mit dem Leistungsverstärker 4 (PA - Power Amplifier) aktivierendes Schaltsignal. Der Verstärkerteil B wird gemäß dem dargestellten Beispiel über ein gesondertes Stromversorgungskabel 15 aus dem Bordnetz des Kraftfahrzeuges mit der erforderlichen Betriebsspannung gespeist. Je nach Ausführung der Schaltung ist es aber auch möglich, die Stromversorgung über die Verbindungsleitungen 12, 13 zu realisieren.

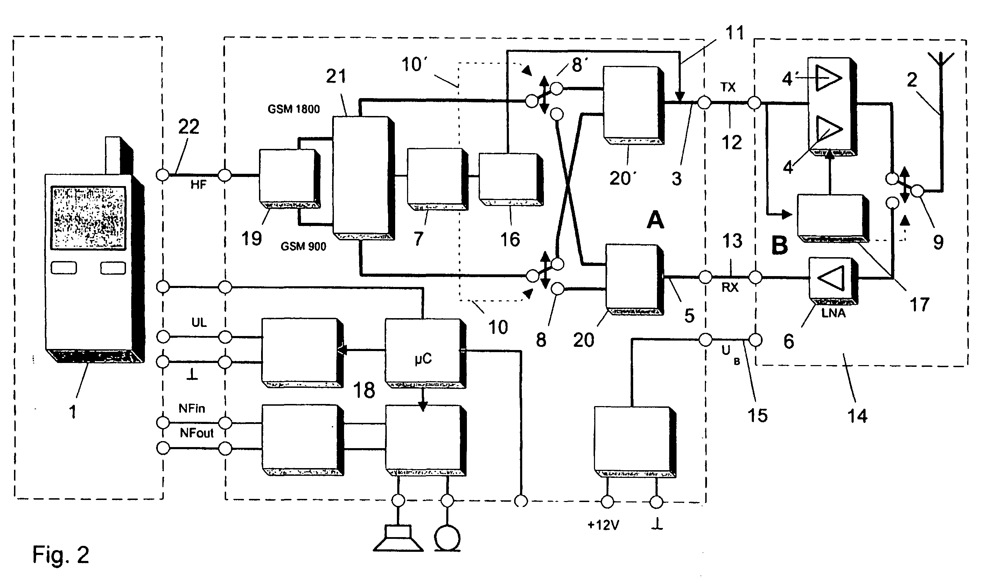

In der Fig. 2 ist eine etwas detailliertere Darstellung der erfindungsgemäßen Schaltungsanordnung gegeben, wobei die gezeigte Ausführungsvariante für den Dualbandbetrieb ausgelegt ist. Die für die Signalumschaltung wesentlichen und bereits im Zusammenhang mit der Fig. 1 erläuterten Bauelemente bzw. Baugruppen finden sich auch hier wieder. Allerdings sind diese durch weitere, den Dualbandbetrieb ermöglichende Baueinheiten komplettiert. Es handelt sich hierbei unter anderem um so genannte Diplexer 19, 20, 20', welche die Aufteilung bzw. Zusammenführung der beiden unterstützten Frequenzbänder ermöglichen. Außerdem ist gemäß dem Ausführungsbeispiel der Fig. 2 dem Detektor 7 ein Coder 16 nachgeschaltet. Durch die Kombination aus Detektor 7 und Coder 16 ist es möglich, ein hinsichtlich seines Informationsgehaltes komplexeres Schaltsignal zu erzeugen und dem über den Diplexer 20' geführten Sendesignal (oder auch gemäß anderer möglicher Ausführungen über den Diplexer 20 dem Empfangssignal) zu überlagern. In dem Verstärkerteil wird das Schaltsignal vom HF-Signal getrennt und durch einen Decoder 17 ausgewertet. Der Decoder 17 schaltet einerseits den antennenseitigen HF-Umschalter 9 im Falle eines geräteseitig vom Detektor 7 erkannten Sendesignals in den Schaltzustand für den Sendebetrieb um und wertet gleichzeitig das Schaltsignal dahingehend aus, welcher der beiden, im vorliegenden Beispiel in einem gemeinsamen Baustein untergebrachten, Leistungsverstärker4, 4' entsprechend dem zum Senden vom Mobilfunkgerät 1 verwendeten Frequenzband anzusteuern, das heißt zu aktivieren ist.

Wird also beispielsweise von dem Mobiltelefon 1 ein GSM1800-Signal ausgesendet, so wird dieses zunächst über den als Frequenzbandweiche wirkenden Diplexer 19 einem Koppler 21 zugeführt. Vom Koppler 21 wird das Sendesignal einerseits an den Diplexer 20' weitergeleitet und andererseits dem Detektor 7 zugeführt, welcher das Schaltsignal zur Umschaltung der HF-Umschalter 8, 8', 9 und damit für die Zuführung des HF-Signals zum Sendezweig 3 erzeugt und ausgibt. Auf Grund dessen, dass es sich um ein GSM1800-Signal handelt, wird durch den Detektor 7 im Zusammenwirken mit dem Coder 16 ein komplexes Schaltsignal generiert, welches zum einen die grundsätzliche Information zum Setzen des HF-Umschalters 9 in den Sendebetrieb und zum anderen eine Information über das Frequenzband des Sendesignals enthält. Dieses Schaltsignal wird von dem Decoder 17 des Verstärkerteils B dahingehend interpretiert, dass er den HF-Umschalter 9 in den Schaltzustand "Sendebetrieb" umschaltet und außerdem den zur Verstärkung im GSM1800-Frequenzband geeigneten Leistungsverstärker 4, 4' (beispielsweise Leistungsverstärker 4') aktiv schaltet. Wie bereits weiter oben erläutert richtet sich die genaue Beschaffenheit des komplexen Schaltsignals nach den Erfordernissen für die Ansteuerung der Leistungsverstärker 4,4' oder gegebenenfalls weiterer mittels des Schaltsignals zu betätigender Bauelemente oder Baugruppen des Verstärkerteils B. In jedem Falle ist gemäß der zu bevorzugenden Ausführungsform der Fig. 2 nur im Sendebetrieb einer der beiden, und zwar jeweils der bezogen auf das zum Senden verwendete Frequenzband richtige Leistungsverstärker 4,4' aktiv. Beim Fehlen eines Sendesignals nehmen hingegen die HF-Umschalter 8, 8', 9 eine Schalterstellung ein, durch die der Signalzweig 5 mit dem breitbandigen Empfangsverstärker 6 in den Signalweg zwischen Mobiltelefon 1 und Antenne 2 geschaltet ist.

Bei den HF-Umschaltern 8, 8', 9 handelt es sich vorzugsweise um kontaktlose Bauelemente. Der gesamte Schaltungsteil B mit den Verstärkern 4, 4', 6, dem Decoder 17 und dem antennenseitigen HF-Umschalter 9 (Verstärkerteil) ist in den Antennenfuß 14 der externen Antenne 2 integriert. Hierbei können vorteilhafterweise zur Befestigung des Antennenfußes 14 an der Autokarosserie dienende Blech- bzw. Metallteile gleichzeitig als Kühlkörper für den Verstärkerteil B, insbesondere für dessen Leistungsverstärker 4, 4', dienen.

### Liste der verwendeten Bezugszeichen

- 1: Mobilfunkgerät
- 2: (externe) Antenne
- 3: Signalzweig (Sendezweig)
- 4, 4': Leistungsverstärker
- 5: Signalzweig (Empfangszweig)
- 6: Empfangsverstärker
- 7: Detektor
- 8, 8': HF-Umschalter
- 9: HF-Umschalter
- 10, 10': Steuerverbindung
- 11: Steuerverbindung
- 12: Verbindungsleitung (als Teil der Antennenzuleitung)
- 13: Verbindungsleitung (als Teil der Antennenzuleitung)
- 14: Antennenfuß
- 15: Stromversorgungsleitung
- 16: Coder
- 17: Decoder
- 18: Freisprecheinrichtung
- 19: Diplexer
- 20, 20': Diplexer
- 21: Koppler
- 22: Antennenzuleitungskabel

- A: Schaltungsteil (Steuerteil)
- B: Schaltungsteil (Verstärkerteil)

## Patentansprüche

1. Schaltungsanordnung zum Kompensieren der Dämpfung in einem Antennenzuleitungskabel (22, 12, 13) zwischen einem Mobilfunkgerät (1) und einer externen Antenne (2), welche zumindest einen zum Verstärken von auszusendenden HF-Signalen ausgebildeten Signalzweig (3) mit einem oder mehreren Leistungsverstärkern (4, 4'), einen zum Verstärken von empfangenen HF-Signalen ausgebildeten Signalzweig (5) mit einem Empfangsverstärker (6) sowie eingangs- und ausgangsseitig der Signalzweige, also geräte- oder antennenseitig angeordnete HF-Umschalter (8, 8', 9) umfasst, die über Steuerverbindungen (10, 10', 11) durch ein von einem Detektor (7) erzeugtes Schaltsignal so geschaltet werden, dass im Falle der Detektion eines vom Mobilfunkgerät (1) ausgehenden Sendesignals HF-Signale über den Sendezweig (3, 4, 4') geführt werden, während bei fehlendem Sendesignal und im Grundzustand der Schaltungsanordnung stets der Empfangszweig (5, 6) in den Signalweg zwischen Mobilfunkgerät (1) und Antenne (2) geschaltet ist, **dadurch gekennzeichnet, dass** die Schaltungsanordnung in zwei voneinander getrennt angeordnete, durch Verbindungsleitungen (12, 13) miteinander verbundene Schaltungsteile (A, B), nämlich einen der Erzeugung des Schaltsignals für die Ansteuerung der HF-Umschalter (8, 8', 9) beim Sendebetrieb dienenden sowie zumindest einen geräteseitigen HF-Umschalter (8, 8') umfassenden Schaltungsteil (A) und einen der Signalverstärkung dienenden, einen antennenseitigen HF-Umschalter (9) umfassenden und im Antennenfuß (14) angeordneten Schaltungsteil (B), aufgeteilt ist und dem Schaltungsteil B über eine Verbindungsleitung das den antennenseitigen HF-Umschalter (9) betätigende Schaltsignal zugeführt wird.

2. Schaltungsanordnung nach Anspruch 1, **dadurch gekennzeichnet, dass** das von dem Detektor (7) des Schaltungsteils (A) erzeugte Schaltsignal dem HF-Umschalter (9) zugeleitet wird, indem es im Schaltungsteil (A) dem Sende- oder Empfangssignal überlagert, mit diesem über eine der Verbindungsleitungen (12, 13) dem Schaltungsteil (B) zugeführt und dort wieder vom HF-Signal getrennt sowie auf den HF-Umschalter (9) geführt wird.

3. Schaltungsanordnung nach Anspruch 1 oder 2, **dadurch gekennzeichnet, dass** das von dem Detektor (7) erzeugte Schaltsignal auch zur Ansteuerung des oder der Leistungsverstärker (4, 4') dient, so dass nur im Sendebetrieb der Schaltungsanordnung ein Leistungsverstärker (4, 4') aktiviert, das heißt aufgesteuert ist.

4. Schaltungsanordnung nach Anspruch 3, **dadurch gekennzeichnet, dass** der Schaltungsteil (B) für einen dual- oder multibandigen Betrieb über mehrere, für verschiedene Frequenzbänder geeignete Leistungsverstärker (4, 4') und einen breitbandigen Empfangsverstärker (6) verfügt, wobei dem das Schaltsignal erzeugenden Detektor (7) ein im Schaltungsteil (A) angeordneter Coder (16) nachgeschaltet ist, mittels welchem dem Schaltsignal eine Information über das dem Sendesignal des Mobilfunkgerätes (1) zugeordnete Frequenzband hinzugefügt wird, welche durch einen Decoder (17) im Schaltungsteil (B) ausgewertet und dazu genutzt wird, den HF-Umschalter (9) auf den Sendezweig (3, 4, 4') umzuschalten sowie den für dieses Frequenzband geeigneten Leistungsverstärker (4, 4') zu aktivieren.

5. Schaltungsanordnung nach einem der Ansprüche 1 bis 4, **dadurch gekennzeichnet, dass** die Stromversorgung des Schaltungsteils (B) über die Verbindungsleitungen (12) und/oder (13) oder über gesonderte Stromversorgungsleitungen (15) erfolgt.

6. Schaltungsanordnung nach einem der Ansprüche 1 bis 5, **dadurch gekennzeichnet, dass** der Schaltungsteil (A) in eine Freisprecheinrichtung (18) für ein Mobiltelefon (1) integriert ist.

7. Schaltungsanordnung nach einem der Ansprüche 1 bis 6, **dadurch gekennzeichnet, dass** gegebenenfalls zur Befestigung des Antennenfußes (14) dienende Blech- oder Metallteile als Kühlkörper für den Verstärkerteil (B) genutzt werden.

## Claims

1. Circuit arrangement for compensation of the attenuation in an antenna feed cable (22, 12, 13) between a mobile radio unit (1) and an external antenna (2) which comprises at least one signal branch (3) with one or several power amplifiers (4, 4') designed to amplify HF signals that are to be transmitted, one signal branch (5) with a reception amplifier (6) designed to amplify received HF signals, as well as HF switches (8, 8', 9) arranged on the input and output side of the signal branches, i.e. on the device or antenna side, which by means of control connections (10, 10', 11) are switched in such a way by a switch signal triggered by a detector (7) that where a transmission signal is detected emanating from the mobile radio unit (1) HF signals are passed through the transmission branch (3, 4, 4'), while in the absence of a transmission signal and in the initial state of the circuit arrangement the reception branch (5, 6) is switched to the signal path between the mobile radio unit (1) and antenna (2),
**characterized in that**
the circuit arrangement is divided up into two switching sections (A, B) that are arranged separately from one another and connected together by connection lines (12, 13), i.e. one switching section (A) serving the purpose of generating the switching signal for the activation of the HF switches (8, 8', 9) during transmission operation and comprising at least one HF switch (8, 8') on the device side, and one switching section (B) arranged in the base of the antenna (14) which serves the purpose of amplifying the signal and comprises an HF switch (9) on the antenna side, and the switching signal which triggers the HF switch (9) on the antenna side and which is fed to switching section (B) by means of a connecting line.

2. Circuit arrangement according to claim 1, **characterized in that** the switching signal produced by the detector (7) of switching section (A) is passed to the HF switch (9) by being superimposed in switching section (A) on the transmission or reception signal, then passed with this signal by means of one of the connection lines (12, 13) to switching section (B), from where it is separated again from the HF signal and passed to the HF switch (9).

3. Circuit arrangement according to claim 1 or 2, **characterized in that** the switching signal produced by the detector (7) is also used to activate the power amplifier(s) (4, 4'), so that a power amplifier (4, 4') is activated, i.e. switched on, only during transmission operation of the circuit arrangement.

4. Circuit arrangement according to claim 3, **characterized in that** the switching section (B) for dual or multiband operation has several power amplifiers (4, 4') suitable for various frequency bands and a broadband reception amplifier (6), whereby a coder (16) located in switching section (A) is switched downstream to the detector (7) producing the switching signal, and by means of this coder, information is provided to the switching signal on the frequency band allocated to the transmission signal of the mobile radio unit (1), said information being evaluated by a decoder (17) in switching section (B) and used to change the HF switch (9) over to the transmission branch (3, 4, 4') and activate the appropriate power amplifier (4, 4') for this frequency band.

5. Circuit arrangement according to any of the claims 1 to 4, **characterized in that** the power supply of switching section (B) is provided by the connecting lines (12) and/or (13) or by means of separate power supply lines (15).

6. Circuit arrangement according to any of the claims 1 to 5, **characterized in that** the switching section (A) is integrated into a hands-free system (18) for a mobile telephone (1).

7. Circuit arrangement according to any of the claims 1 to 6, **characterized in that** any sheet metal or metal components used for attaching the base of the antenna (14) serve as heat sinks for amplifier section (B).

## Revendications

1. Circuit pour la compensation de l'affaiblissement dans un câble d'amenée d'antenne (22, 12, 13) entre un téléphone mobile (1) et une antenne externe (2), comportant au moins une branche de signal (3) formée pour l'amplification de signaux HF à émettre, avec un ou plusieurs amplificateurs de puissance (4, 4'), une branche de signal (5) formée pour l'amplification des signaux HF reçus, avec un amplificateur de réception (6) ainsi que des commutateurs HF (8, 8', 9) disposés côté entrée et sortie des branches de signal, soit côté téléphone ou côté antenne, lesquels sont commutés via des connexions de commande (10, 10', 11) par un signal de commutation généré par un détecteur (7), si bien qu'en cas de détection d'un signal d'émission sortant du téléphone mobile (1), des signaux HF sont conduits par la branche d'émission (3, 4, 4'), cependant qu'en cas de défaut de signal d'émission et en état initial du circuit la branche de réception (5, 6) est toujours commutée sur la voie de signal entre téléphone mobile (1) et antenne (2), **caractérisé en ce que** le circuit est divisé en deux parties de circuit (A, B) séparées l'une de l'autre, reliées entre elles par des lignes de connexion (12, 13), en l'occurrence une partie de circuit (A) servant à la génération du signal de commutation pour la commande des commutateurs HF (8, 8', 9) en mode d'émission et comprenant au moins un commutateur HF côté téléphone (8, 8'), et une partie de circuit (B) servant à l'amplification de signal, comprenant un commutateur HF côté antenne (9) et disposée dans l'embase d'antenne (14), et **en ce que** le signal de commutation actionnant le commutateur HF côté antenne (9) est conduit vers la partie de circuit B via une ligne de connexion.

2. Circuit selon la revendication 1, **caractérisé en ce que** le signal de commutation généré par le détecteur (7) de la partie de circuit (A) est conduit vers le commutateur HF (9), en étant superposé dans la partie de circuit (A) au signal d'émission ou de réception, conduit avec celui-ci vers la partie de circuit (B) via une des lignes de connexion (12, 13) où il est à nouveau séparé du signal HF et conduit vers le commutateur HF (9).

3. Circuit selon la revendication 1 ou 2, **caractérisé en ce que** le signal de commutation généré par le détecteur (7) sert aussi à la commande de l'amplificateur, ou des amplificateurs de puissance (4, 4'), si bien qu'un amplificateur de puissance (4, 4') n'est activé, autrement dit commandé, qu'en mode d'émission du circuit.

4. Circuit selon la revendication 3, **caractérisé en ce que** la partie de circuit (B) dispose pour un mode dual ou multibandes de plusieurs amplificateurs de puissance (4, 4') adaptés pour différentes bandes de fréquence et d'un amplificateur de réception (6) à bande large, un codeur (16) disposé dans la partie de circuit (A) étant monté en aval du détecteur (7) générant le signal de commutation, au moyen duquel une information sur la bande de fréquence affectée au signal d'émission du téléphone mobile (1) est ajoutée au signal de commutation, ladite information étant évaluée par un décodeur (17) dans la partie de circuit (B) et utilisée pour commuter le commutateur HF (9) sur la branche d'émission (3, 4, 4') et activer l'amplificateur de puissance (4, 4') adapté à cette bande de fréquence.

5. Circuit selon l'une des revendications 1 à 4, **caractérisé en ce que** l'alimentation en courant de la partie de circuit (B) est effectuée via les lignes de connexion (12) et/ou (13), ou via des lignes d'alimentation en courant séparées (15).

6. Circuit selon l'une des revendications 1 à 5, **caractérisé en ce que** la partie de circuit (A) est intégrée à un équipement mains libres (18) pour téléphone mobile (1).

7. Circuit selon l'une des revendications 1 à 6, **caractérisé en ce que** des pièces en tôle ou métalliques servant le cas échéant à la fixation de l'embase d'antenne (14) sont utilisées comme corps de refroidissement pour la partie d'amplificateur (B).
